(19) Europäisches Patentamt
European Patent Office
Office européen des brevets

(11) **EP 3 672 205 A1**

(12) **EUROPEAN PATENT APPLICATION**
published in accordance with Art. 153(4) EPC

(43) Date of publication:
**24.06.2020 Bulletin 2020/26**

(51) Int Cl.:
**H04L 29/08** *(2006.01)*

(21) Application number: **18908285.2**

(22) Date of filing: **14.06.2018**

(86) International application number:
**PCT/CN2018/091213**

(87) International publication number:
**WO 2019/184096 (03.10.2019 Gazette 2019/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.03.2018 CN 201810265146**

(71) Applicant: **Wangsu Science & Technology Co.,
Ltd.
Shanghai 200030 (CN)**

(72) Inventors:
• **CHEN, Yonghuang**
**Shanghai 200030 (CN)**
• **SU, Zonglei**
**Shanghai 200030 (CN)**
• **ZOU, Yufang**
**Shanghai 200030 (CN)**

(74) Representative: **Hanna Moore + Curley
Garryard House
25/26 Earlsfort Terrace
Dublin 2, D02 PX51 (IE)**

(54) **METHOD AND SYSTEM FOR DOWNLOADING DATA RESOURCES**

(57) A method for downloading a data resource includes: at the beginning of downloading a target data resource, determining, by a first device, a plurality of candidate devices storing data slices of the target data resource and slice serial numbers of data slices of the target data resource stored by each of the plurality of candidate devices; acquiring, by the first device, a total number of slices for data slices of a same type of data resources as the target data resource that have been downloaded from each of the plurality of candidate devices; and downloading, by the first device, the data slices of the target data resource according to the slice serial numbers, the total number of slices downloaded from each of the plurality of candidate devices, and a preset time-length for overtime switch.

FIG. 2

**EP 3 672 205 A1**

**Description**

FIELD OF DISCLOSURE

The present disclosure generally relates to the field of data transmission technology and, more particularly, relates to a method and system for downloading a data resource.

BACKGROUND

With the continuous advancement of Internet technology, CDN (Content Delivery Network) service has also developed rapidly. A CDN service cluster includes a large number of cache devices for storing data resources, where a user may acquire a data resource stored in the nearby cache devices in a short period of time.

At present, CDN service clusters mostly use the Client/Server mode to implement the transmission of data resources between CDN nodes. When there is a data resource to be transmitted, the source device may serve as a server (i.e., data transmitting terminal) and CDN nodes may serve as clients (i.e., data receiving terminals). The source device may simultaneously transmit the data resource to a plurality of CDN nodes, to allow the data resource to be deployed on the plurality of CDN nodes. Further, each of the plurality of CDN nodes may also serve as a server, and respectively transmit the data resource to a plurality of different clients.

In the process of implementing the present disclosure, applicants have found that the existing technologies have at least the following problems:

As the service scopes of CDN service clusters expand, more and more CDN nodes are used as the clients, and the data volumes of data resources are also increasing. Accordingly, a server often takes a lot of time and allocates a large volume of bandwidth, inputs/outputs, etc., to implement the transmission of a data resource, and thus the data resource transmission efficiency is low.

BRIEF SUMMARY OF THE DISCLOSURE

To solve the problems in the existing technologies, the embodiments of the present disclosure provide a method and system for downloading a data resource. The technical solutions are as follows.

In one aspect, a method for downloading a data resource is provided. The method includes:

at the beginning of downloading a target data resource, determining, by a first device, a plurality of candidate devices storing data slices of the target data resource and slice serial numbers of data slices of the target data resource stored by each of the plurality of candidate devices;
acquiring, by the first device, a total number of slices for data slices of a same type of data resources as the target data resource that have been downloaded from each of the plurality of candidate devices; and
downloading, by the first device, the data slices of the target data resource according to the slice serial numbers, the total number of slices downloaded from each of the plurality of candidate devices, and a preset time-length for overtime switch.

Optionally, downloading, by the first device, the data slices of the target data resource according to the slice serial numbers, the total number of slices, and the preset time-length for overtime switch includes:

collecting, by the first device, target slice serial numbers for data slices that are not stored locally;
for a first serial number in the target slice serial numbers, determining, by the first device, at least one device, from the plurality of candidate devices, that stores a data slice corresponding to the first serial number; and
based on the preset time-length for overtime switch, downloading, by the first device, the data slice corresponding to the first serial number from the at least one device in a descending order of the total number of slices.

Optionally, downloading, by the first device, the data slice corresponding to the first serial number from the at least one device in a descending order of the total number of slices based on the preset time-length for overtime switch includes:

downloading, by the first device, the data slice corresponding to the first serial number from a device corresponding to a largest total number of slices among the at least one device; and
if the data slice corresponding to the first serial number is not received by the first device after the preset time-length for overtime switch, downloading, by the first device, the data slice corresponding to the serial number from a device corresponding to a second largest total number of slices among the at least one device.

Optionally, after collecting, by the first device, the target slice serial numbers of the data slices that are not stored locally, the method further includes:

if the data slice corresponding to the first serial number is not stored in the plurality of candidate devices, after a preset time-length, reacquiring, by the first device, slice serial numbers of data slices of the target data source currently stored by each of the plurality of candidate devices;
re-determining, by the first device, the at least one device, from the plurality of candidate devices, that stores the data slice corresponding to the first serial number; and

downloading, by the first device, the data slice corresponding to the first serial number from the at least one device in a descending order of the total number of slices according to the preset time-length for overtime switch.

Optionally, after downloading the data slices of the target data resource, the method further includes:

calculating, by the first device, an average download time-length and a variance of download time-lengths of the plurality of data slices; and
updating, by the first device, the time-length for overtime switch according to the average download time-length and the variance.

Optionally, before acquiring, by the first device, the slice serial numbers of the data slices of the target data resource stored by each of the plurality of candidate devices recommended by a scheduling device, the method further includes:

randomly selecting, by a source device of the target data resource, a plurality of relay devices among target devices corresponding to the target data resource;
randomly acquiring, by each of the plurality of relay devices, a data slice of the target data resource from the source device, and reporting, by each of the plurality of relay devices, a data slice acquisition status to the scheduling device; and
recommending, by the scheduling device, to each of the target devices, a candidate device, among the plurality of relay devices, that belongs to a same carrier/region as that target device.

In another aspect, a system for downloading a data resource is provided. The system includes a plurality of network devices. The plurality of network devices include a first device, where the first device is configured to:

at the beginning of downloading a target data resource, determine a plurality of candidate devices storing data slices of the target data resource and slice serial numbers of data slices of the target data resource stored by each of the plurality of candidate devices;
acquire a total number of slices for data slices of a same type of data resources as the target data resource that have been downloaded from each of the plurality of candidate devices; and
download the data slices of the target data resource according to the slice serial numbers, the total number of slices downloaded from each of the plurality of candidate devices, and a preset time-length for overtime switch.

Optionally, the first device is specifically configured to:

collect target slice serial numbers for data slices that are not stored locally;
for a first serial number in the target slice serial numbers, determine at least one device, from the plurality of candidate devices, that stores a data slice corresponding to the first serial number; and
based on the preset time-length for overtime switch, download the data slice corresponding to the first serial number from the at least one device in a descending order of the total number of slices.

Optionally, the first device is specifically configured to:

download the data slice corresponding to the first serial number from a device corresponding to a largest total number of slices among the at least one device; and
if the data slice corresponding to the first serial number is not received by the first device after the preset time-length for overtime switch, download the data slice corresponding to the serial number from a device corresponding to a second largest total number of slices among the at least one device.

Optionally, the first device is further configured to:

if the data slice corresponding to the first serial number is not stored in the plurality of candidate devices, after a preset time-length, reacquire slice serial numbers of data slices of the target data source currently stored by each of the plurality of candidate devices;
re-determine the at least one device, from the plurality of candidate devices, that stores the data slice corresponding to the first serial number; and
download the data slice corresponding to the first serial number from the at least one device in a descending order of the total number of slices according to the preset time-length for overtime switch.

Optionally, the first device is further configured to:

calculate an average download time-length and a variance of download time-lengths of the plurality of data slices; and
update the time-length for overtime switch according to the average download time-length and the variance.

Optionally, the plurality of network devices further include a scheduling device and a source device of the target data resource, where:

the source device is configured to randomly select a plurality of relay devices among target devices corresponding to the target data resource;

each of the plurality of relay devices is configured to randomly acquire a data slice of the target data resource from the source device, and report a data slice acquisition status to the scheduling device; and

the scheduling device is configured to recommend to each of the target devices, a candidate device, among the plurality of relay devices, that belongs to a same carrier/region as that target device.

The beneficial effects brought by the technical solutions provided by the embodiments of the present disclosure are as follows:

In the embodiments of the present disclosure, at the beginning of downloading a target data resource, the first device determines a plurality of candidate devices that store the data slices of the target data resource, and slice serial numbers of the data slices stored by each of the plurality of candidate devices. The first device acquires a total number of slices for the data slices of the same type of data resources as the target data resource that have been downloaded from each of the plurality of candidate devices. The first device downloads all of the data slices of the target data resource according to the slice serial numbers, the total number of slices downloaded from each of the plurality of candidate devices, and a preset time-length for overtime switch. In this way, in the process of downloading a data resource by a device cluster, the P2P mode is used instead of the Client/Server mode. The data resource is sliced and distributed to a plurality of devices. Download of the data resource may be achieved through data sharing between the devices, which greatly reduces the load on the source device. At the same time, the more the number of data slices downloaded by the first device from a certain device, it may be determined that the faster the first device downloads a data slice from that device, and the better the network quality of the transmission path between the first device and that device. According to a descending order of the total number of slices, the first device may select a transmission path with a better network quality to transmit the data resource, which saves time for data transmission, thereby improving data resource transmission efficiency. In addition, through compressing and slicing the data resource and transmitting the data resource in the form of data slices, the complete data resource may be downloaded through only a small number of data interactions between the devices.

BRIEF DESCRIPTION OF THE DRAWINGS

To make the technical solutions in the embodiments of the present disclosure clearer, a brief introduction of the accompanying drawings consistent with descriptions of the embodiments will be provided hereinafter. It is to be understood that the following described drawings are merely some embodiments of the present disclosure. Based on the accompanying drawings and without creative efforts, persons of ordinary skill in the art may derive other drawings.

FIG. 1 is a system architecture for downloading a data resource according to some embodiments of the present disclosure;

FIG. 2 is a flowchart of a method for downloading a data resource according to some embodiments of the present disclosure; and

FIG. 3 is a signaling flowchart for downloading a data resource according to some embodiments of the present disclosure.

DETAILED DESCRIPTION

To make the objective, technical solutions, and advantages of the present disclosure clearer, the implementations of the present disclosure will be made in detail hereinafter with reference to the accompanying drawings.

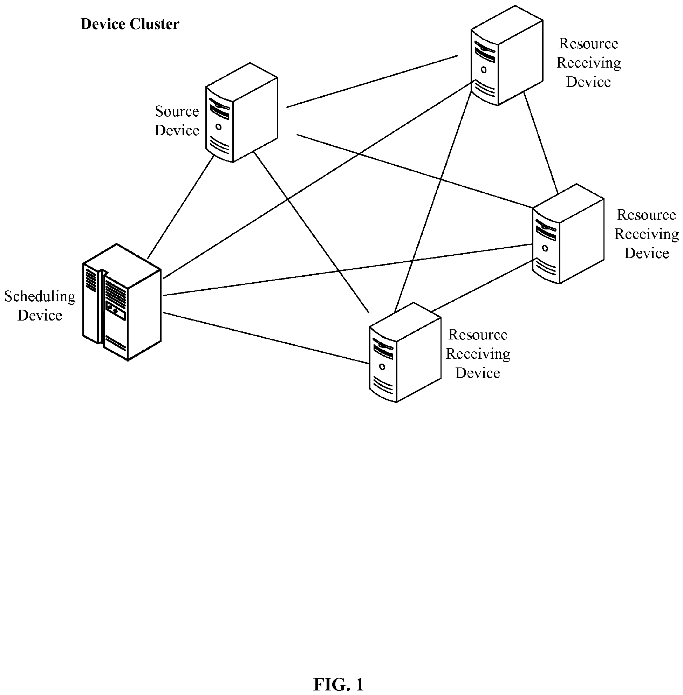

The embodiments of the present disclosure provide a method for downloading a data resource. The method may be implemented using a device cluster. The device cluster includes a large number of network devices, and may be a CDN service cluster or another cluster that has data resource-downloading requirements. The network devices in the device cluster may be classified mainly into a scheduling device, a source device, and one or more resource receiving devices. A specific system architecture for the device cluster may refer to FIG. 1. The scheduling device may be configured to perform scheduling and management on the resource receiving devices in the process of downloading a data resource by the resource receiving devices, the source device may be configured to store a to-be-distributed data resource and preprocess the data resource, and the resource receiving devices may be configured to download and store the data resource. It should be noted that in the process of downloading different data resources, different source devices may exist. A resource receiving device may become a source device, while a source device may also implement the functions of a resource receiving device. The foregoing network devices may each include a processor, a memory, and a transceiver. The processor may be configured to implement the data resource downloading process in the following process. The memory may be configured to store data required and generated in the following process. The transceiver may be configured to receive and transmit relevant data in the following process. In the disclosed embodiments, the device cluster will be exemplified as a CDN service cluster, the scheduling device will be exemplified as the central server of the CDN service cluster, while the source device and the resource receiving devices will both be exemplified as CDN nodes. The process for other forms of device clusters may be similar to the description for the CDN service cluster, details of which will not be repeated.

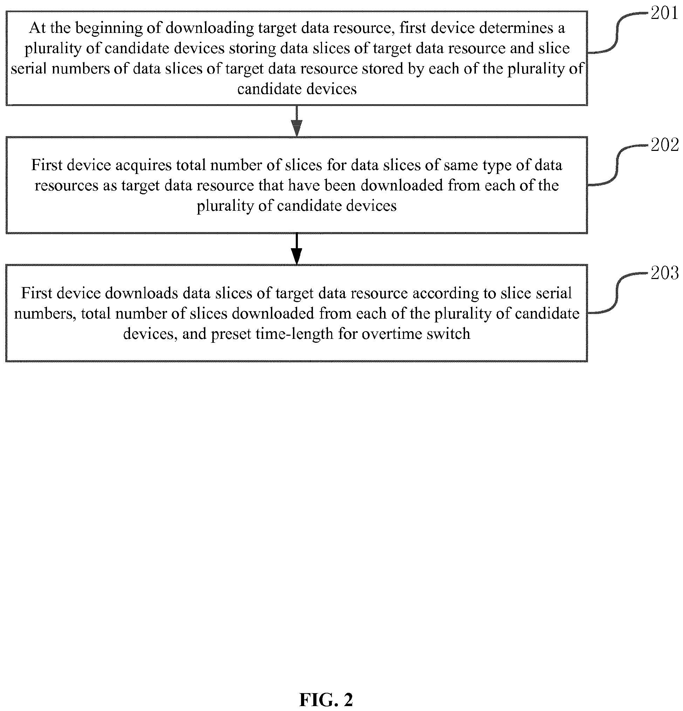

The flowchart shown in FIG. 2 will be described in detail hereinafter in conjunction with specific implementations. The content may be as follows.

Step 201: at the beginning of downloading a target data resource, a first device determines a plurality of candidate devices storing data slices of the target data resource, and slice serial numbers of data slices stored by each of the plurality of candidate devices.

Here, the first device may be any CDN node in the CDN service cluster. For ease of understanding, the first device may be referred to as "first node" hereinafter.

In one implementation, when a certain data resource (e.g., a target data resource) needs to be distributed in the CDN service cluster, the target data resource may be compressed and sliced, to allow the target data resource to be divided into a plurality of data slices of the same size. Each data slice corresponds to a unique slice serial number. Afterwards, the data slices of the target data resource may be stored separately into certain CDN nodes of the CDN service cluster. In this way, when the first node receives an instruction for downloading the target data resource or meets other requirements for downloading the target data resource, the first node may begin to download the target data resource. At this moment, the first node may first determine a plurality of candidate devices (also referred to as "candidate nodes" hereinafter for ease of understanding) that currently store the data slice(s) of the target data resource, and determine the slice serial numbers of the data slices of the target data resource stored in these candidate nodes. It should be noted that the first node may be a CDN node that has already stored data slice(s) of the target data resource, or may be a CDN node that does not store any data slice of the target data resource.

Step 202: the first device acquires a total number of slices for data slices of the same type of data resources as the target data resource that have been downloaded from each of the plurality of candidate devices.

The same type of data resources as the target data resource may be a data resource that belongs to the same topic as the target data resource. For example, the target data resource and the same type of data resources may be different versions of update package for the same application program, or video files of different episodes for the same TV series, etc.

In one implementation, each time after a CDN node downloads a data slice of a data resource under a topic (x) from another CDN node, the CDN node may update the locally recorded total number of slices for the data slices of the data resources under the topic(x) that have already been downloaded from the corresponding CDN node. Accordingly, after determining the plurality of candidate nodes, the first node may acquire the total number of slices for the data slices of the same type of data resources as the target data resource that have been downloaded from each candidate node. Further, the first node may generate an optimal IP (Internet Protocol) list for downloading the data resources under the topic (x), where the optimal IP list may record IP addresses of a plurality of nodes according to a descending order of the total number of slices downloaded from each node.

Step 203: the first device downloads all of the data slices of the target data resource according to the slice serial numbers, the total number of slices downloaded from each of the plurality of candidate devices, and a preset time-length for overtime switch.

In one implementation, after determining the plurality of candidate nodes and the slice serial numbers and the total number of slices corresponding to each candidate node, based on the preset time-length for overtime switch, the first node may download all of the data slices of the target data resource from the plurality of candidate nodes according to the slice serial numbers and the total number of slices. Here, the time-length for overtime switch may have been set by the first node before Step 201. When the first node downloads a data slice from a candidate node, if the download time-length exceeds the time-length for overtime switch, a candidate node-switching process may be triggered to re-download the data slice.

Optionally, the first node may preferentially download a data slice through a transmission path with a better network quality. Correspondingly, the process of Step 203 may be as follows: the first device collects target slice serial numbers for data slices that are not stored locally; for a first serial number of the target slice serial numbers, the first device determines, among the candidate devices, at least one device that stores the data slice corresponding to the first serial number; based on the preset time-length for overtime switch, the first device downloads the data slice corresponding to the first serial number from the at least one candidate device according to a descending order of the total number of slices.

In one implementation, after determining the plurality of candidate nodes and the slice serial numbers and the total number of slices corresponding to each candidate node, the first node may first collect the target slice serial numbers for the data slices that are not stored locally, and then download the data slices corresponding to each serial number from the candidate nodes. Here, take the first serial number as an example. The first node may determine, among the plurality of candidate nodes, at least one node that stores the data slice corresponding to the first serial number. Based on the preset time-length for overtime switch, the first device may download the data slice corresponding to the first serial number from the at least one candidate device according to a descending order of the total number of slices. It is to be understood that the larger the total number of slices for a node, the larger the number of data slices downloaded by the first node from the corresponding node, the better the network quality of the transmission path between the first node and the corresponding node. Accordingly, when downloading a data slice, the first node may preferentially select a node corresponding to a larger total number of slices.

Optionally, the above process for the first node to download the data slice corresponding to the first serial number based on the time-length for overtime switch may be specifically as follows: the first device downloads the data slice corresponding to the first serial number from a device with the largest total number of slices in the at least one device; if the first device still has not received the data slice corresponding to the first serial number after the preset time-length for overtime switch, the first device downloads the data slice corresponding to the first serial number from a device with the second largest total number of slices in the at least one device.

In one implementation, after the first node determines at least one node that stores the data slice corresponding to the first serial number, the node with the largest total number of slices may be selected first, then the data slice corresponding to the first serial number is downloaded from that node. At the same time, the first node may start timing after sending the download request for the data slice corresponding to the first serial number. If the first node has not received the data slice corresponding to the first serial number after the preset time-length for overtime switch, the first node may select a node corresponding to the second largest total number of slices, in the at least one node, to download the data slice corresponding to the first serial number. Similarly, if the first node still has not received the data slice corresponding to the first serial number after the preset time-length for overtime switch, the first node may download the data slice corresponding to the first serial number from a node corresponding to the third largest total number of slices in the at least one node, and so on.

Optionally, if the data slice corresponding to the first serial number is not stored in all of the candidate devices, after a preset time-length, the first device reacquires the slice serial numbers of the data slices of the target data resource currently stored by each candidate device; the first device re-determines at least one device that stores the data slice corresponding to the first serial number in the candidate devices; based on the preset time-length for overtime switch, the first device downloads the data slice corresponding to the first serial number from the at least one device according to a descending order of the total number of slices.

In one implementation, after the first node collects the target slice serial numbers for the data slices that are not stored locally, if it is found that a certain slice serial number does not exist in all of the determined candidate nodes, after a preset time-length, the first node may re-check the storage status of the data slices in the candidate nodes. Specifically, taking the first serial number as an example, if there is no node storing the data slice corresponding to the first serial number in the determined candidate nodes, after the preset time-length, the first node may reacquire the slice serial numbers of the data slices of the target data resource currently stored by each candidate node. It is to be understood that, when the first node downloads data slices from the candidate nodes, each candidate node may also download data slices from other nodes, so that even if there is no data slice for the first serial number in a candidate node previously, after the preset time-length, there is a great probability that the candidate node has acquired the data slice for the first serial number from other nodes. Accordingly, the first node may re-determine at least one node, among all of the candidate nodes, that stores the data slice corresponding to the first serial number, and then, based on the preset time-length for overtime switch, download the data slice corresponding to the first serial number from the at least one device according to a descending order of the total number of slices. The specific process may refer to the foregoing description.

Optionally, each time after downloading a data resource, a CDN node may update the time-length for overtime switch based on the download conditions of the data slices. The specific process may be as follows: the first device calculates the average download time-length and the variance of the download time-lengths of all of the data slices, and updates the time-length for overtime switch according to the average download time-length and the variance.

In one implementation, after downloading all of the data slices of the target data resource, the first node may obtain the download time-length of each data slice, and then calculate the average download time-length and the variance of download time-lengths of all of the data slices. For example, the time-length for downloading slice 1 may be recorded as $t_1$, the time-length for downloading slice 2 may be recorded as $t_2$, and the time-length for downloading slice $n$ may be recorded as $t_n$, then the average download time-length is $t_{ave}=(t_1+t_2+...+t_n)/n$, and the variance is

$$t_{delta} = \sqrt{((t_1 - t_{ave})^2+...+(t_n - t_{ave})^2)/n}.$$ Further, the first node may update the time-length for overtime switch according to the average download time-length and the variance. For example, the time-length for overtime switch may be $T=t_{ave}+2t_{delta}$. Apparently, the disclosed embodiments are not limited to the above method for calculating the time-length for overtime switch by using the average download time-length and the variance. Other suitable methods for calculating the time-length for overtime switch may also be contemplated here. Afterwards, the first node may apply the updated time-length for overtime switch to the subsequent data resource download processes.

Optionally, the aforementioned candidate nodes may be recommended by the central server to the first node. Correspondingly, before Step 201, the process may be as follows: the source device of the target data resource randomly selects a plurality of relay devices in all of the target devices corresponding to the target data resource; each relay device randomly acquires a data slice of the target data resource from the source device, and reports the data slice acquisition status to the scheduling device; the scheduling device recommends, to each of the target devices, candidate device(s) that belongs to the same carrier/region as the target device among the relay devices.

In one implementation, when a target data resource needs to be added in the CDN service cluster, the technical staff may select in advance one node in the CDN service cluster as the source device (also referred to as the "source node" hereinafter), and then store the target data resource into the source node. Thereafter, the source node may perform compression and slicing on the target data resource, and divide the target data resource into a plurality of data slices of the same size. Each data slice corresponds to a unique slice serial number. Considering that data resources under each topic may have a relatively fixed user group, in the CDN service cluster, all of the CDN nodes may be classified in advance according to a topic based on the region where the user group is located. Each type of topic corresponds to different CDN nodes. Accordingly, the source node of the target data resource may first determine a topic to which the target data resource belongs, then filter out all target nodes associated with the topic, and randomly select a plurality of relay nodes among the target nodes. Afterwards, each relay node may randomly acquire a data slice of the target data resource from the source node, and then report the data slice acquisition status to the central server. The data slice acquisition status here may include a number of acquired data slice(s) of the target data resource, and/or the slice serial number(s) of the acquired data slice(s) of the target data resource. Further, after receiving the acquisition status reported by each relay node, the central server may recommend, to each target node, candidate node(s) that belongs to the same carrier/region as the target node among all of the relay nodes.

In the embodiments of the present disclosure, at the beginning of downloading a target data resource, the first device determines a plurality of candidate devices that store the data slices of the target data resource, and slice serial numbers of the data slices stored by each of the plurality of candidate devices. The first device acquires a total number of slices for the data slices of the same type data resources as the target data resource that have been downloaded from each of the plurality of candidate devices. The first device downloads all of the data slices of the target data resource according to the slice serial numbers, the total number of slices downloaded from each of the plurality of candidate devices, and a preset time-length for overtime switch. In this way, in the process of downloading a data resource by the device cluster, the P2P mode is used instead of the Client/Server mode. The data resource is sliced and distributed to a plurality of devices. Download of the data resource may be achieved through data sharing between the devices, which greatly reduces the load on the source device. At the same time, the more the number of data slices downloaded by the first device from a certain device, it may be determined that the faster the first device downloads a date slice from that device, and the better the network quality of the transmission path between the first device and that device. According to a descending order of the total number of slices, the first device may select a transmission path with a better network quality to transmit the data resource, which saves time for data transmission, thereby improving data resource transmission efficiency. In addition, through compressing and slicing the data resource and transmitting the data resource in the form of data slices, the whole data resource may be downloaded through only a small number of data interactions between the devices.

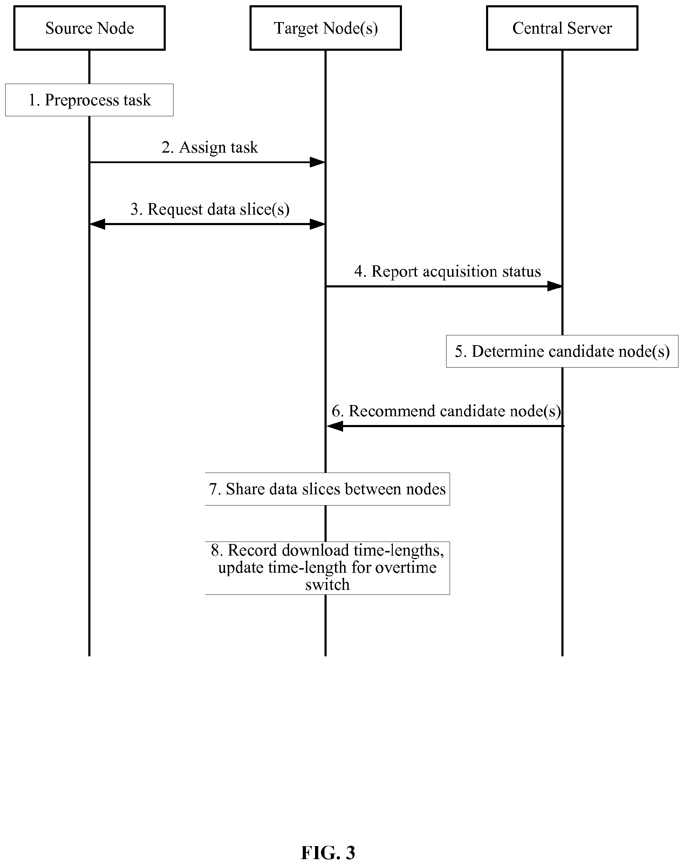

The disclosed embodiments further provide an overall signaling flowchart for downloading a data resource. As shown in FIG. 3, the figure includes a source node, target node(s) (including relay node(s)), and a central server. The specific process may be as follows:

the source node performs task preprocessing (i.e., compressing and slicing the data resource), determines target node(s), and selects relay node(s);

the source node assigns the task to all of the target node(s);

the relay node(s) requests a data slice from the source node;

the relay node(s) reports the data slice acquisition status to the central server;

the central server determines candidate node(s) for each target node;

the central server recommends the candidate node(s) to each target node;

the target node(s) shares data slices between each other; and

the target node(s) records download time-lengths and updates the time-length for overtime switch.

Based on the similar technical concept, the embodiments of the present disclosure further provide a system for downloading a data resource. The system includes a plurality of network devices. The plurality of network devices include a first device, where the first device is configured to:

at the beginning of downloading a target data resource, determine a plurality of candidate devices storing data slices of the target data resource and slice serial numbers of data slices of the target data resource stored by each of the plurality of candidate devices;

acquire a total number of slices for data slices of a same type of data resources as the target data resource that have been downloaded from each of the plurality of candidate devices; and

download the data slices of the target data resource according to the slice serial numbers, the total number of slices downloaded from each of the plurality of candidate devices, and a preset time-length for overtime switch.

Optionally, the first device is specifically configured to:

collect target slice serial numbers for data slices that are not stored locally;

for a first serial number in the target slice serial numbers, determine at least one device, from the plurality of candidate devices, that stores a data slice corresponding to the first serial number; and

based on the preset time-length for overtime switch, download the data slice corresponding to the first serial number from the at least one device in a descending order of the total number of slices

Optionally, the first device is specifically configured to:

download the data slice corresponding to the first serial number from a device corresponding to a largest total number of slices among the at least one device; and

if the data slice corresponding to the first serial number is not received by the first device after the preset time-length for overtime switch, download the data slice corresponding to the serial number from a device corresponding to a second largest total number of slices among the at least one device.

Optionally, the first device is further configured to:

if the data slice corresponding to the first serial number is not stored in the plurality of candidate devices, after a preset time-length, reacquire slice serial numbers of data slices of the target data source currently stored by each of the plurality of candidate devices;

re-determine the at least one device, from the plurality of candidate devices, that stores the data slice corresponding to the first serial number; and

download the data slice corresponding to the first serial number from the at least one device in a descending order of the total number of slices according to the preset time-length for overtime switch.

Optionally, the first device is further configured to:

calculate an average download time-length and a variance of download time-lengths of the plurality of data slices; and

update the time-length for overtime switch according to the average download time-length and the variance.

Optionally, the plurality of network devices further include a scheduling device and a source device of the target data resource, where:

the source device is configured to randomly select a plurality of relay devices among target devices corresponding to the target data resource;

each of the plurality of relay devices is configured to randomly acquire a data slice of the target data resource from the source device, and report a data slice acquisition status to the scheduling device; and

the scheduling device is configured to recommend to each of the target devices, a candidate device, among the plurality of relay devices, that belongs to a same carrier/region as that target device.

In the embodiments of the present disclosure, at the beginning of downloading a target data resource, the first device determines a plurality of candidate devices that store the data slices of the target data resource, and slice serial numbers of the data slices stored by each of the plurality of candidate devices. The first device acquires a total number of slices for the data slices of the same type of data resources as the target data resource that have been downloaded from each of the plurality of candidate devices. The first device downloads all of the data slices of the target data resource according to the slice serial numbers, the total number of slices downloaded from each of the plurality of candidate devices, and a preset time-length for overtime switch. In this way, in the process of downloading a data resource by the device cluster, the P2P mode is used instead of the Client/Server mode. The data resource is sliced and distributed to a plurality of devices. Download of the data resource may be achieved through data sharing between the devices, which greatly reduces the load on the source device. At the same time, the more the number of data slices downloaded by the first device from a certain device, it may be determined that the faster the first device downloads a date slice from that device, and the better the network quality of the transmission path between the first device and that device. According to a descending order of the total number of slices, the first device may select a transmission path with a better network quality to transmit the data resource, which saves time for data transmission, thereby improving data resource transmission efficiency. In addition, through compressing and slicing the data resource and transmitting the data resource in the form of data slices, the whole data resource may be downloaded through only a small number of data interactions between the devices.

A person skilled in the art may understand that all or part of the steps of the above embodiments may take the form of hardware implementation, or take the form of implementation of programs for directing the relevant hardware. The programs may be stored in a computer-readable storage medium. The storage medium may be a read-only memory, a magnetic disk, or an optical disk, etc.

Although the present disclosure has been described with reference to preferred embodiments, these embodiments should not be constructed as limiting the present disclosure. Any modifications, equivalent replacements, and improvements made without departing from the spirit and principle of the present disclosure shall fall within the scope of the protection of the present disclosure.

**Claims**

1. A method for downloading a data resource, comprising:

   at the beginning of downloading a target data resource, determining, by a first device, a plurality of candidate devices storing data slices of the target data resource and slice serial numbers of data slices of the target data resource stored by each of the plurality of candidate devices;
   acquiring, by the first device, a total number of slices for data slices of a same type of data resources as the target data resource that have been downloaded from each of the plurality of candidate devices; and
   downloading, by the first device, the data slices of the target data resource according to the slice serial numbers, the total number of slices downloaded from each of the plurality of candidate devices, and a preset time-length for overtime switch.

2. The method according to claim 1, wherein downloading, by the first device, the data slices of the target data resource according to the slice serial numbers, the total number of slices, and the preset time-length for overtime switch further includes:

   collecting, by the first device, target slice serial numbers for data slices that are not stored locally;
   for a first serial number in the target slice serial numbers, determining, by the first device, at least one device, from the plurality of candidate devices, that stores a data slice corresponding to the first serial number; and
   based on the preset time-length for overtime switch, downloading, by the first device, the data slice corresponding to the first serial number from the at least one device in a descending order of the total number of slices.

3. The method according to claim 2, wherein, based on the preset time-length for overtime switch, downloading, by the first device, the data slice corresponding to the first serial number from the at least one device in a descending order of the total number of slices further includes:

   downloading, by the first device, the data slice corresponding to the first serial number from a device corresponding to a largest total number of slices among the at least one device; and
   if the data slice corresponding to the first serial number is not received by the first device after the preset time-length for overtime switch, downloading, by the first device, the data slice corresponding to the serial number from a device corresponding to a second largest total number of slices among the at least one device.

4. The method according to claim 2, after collecting, by the first device, the target slice serial numbers of the data slices that are not stored locally, the method further includes:

   if the data slice corresponding to the first serial number is not stored in the plurality of candidate devices, after a preset time-length, reacquiring, by the first device, slice serial numbers of data slices of the target data source currently stored by each of the plurality of candidate devices;
   re-determining, by the first device, the at least one device, from the plurality of candidate devices, that stores the data slice corresponding to the first serial number; and
   downloading, by the first device, the data slice corresponding to the first serial number from the at least one device in a descending order of the total number of slices according to the preset time-length for overtime switch.

5. The method according to claim 1, after downloading the data slices of the target data resource, the method further includes:

   calculating, by the first device, an average download time-length and a variance of download time-lengths of the plurality of data slices; and
   updating, by the first device, the time-length for overtime switch according to the average download time-length and the variance.

6. The method according to claim 1, before determining, by a first device, a plurality of candidate devices storing data slices of the target data resource and slice serial numbers of data slices of the candidate devices, the method further includes:

   randomly selecting, by a source device of the target data resource, a plurality of relay devices among target devices corresponding to the target data resource;

randomly acquiring, by each of the plurality of relay devices, a data slice of the target data resource from the source device, and reporting, by each of the plurality of relay devices, a data slice acquisition status to [[the]]a scheduling device; and

recommending, by the scheduling device, to each of the target devices, a candidate device, among the plurality of relay devices, that belongs to a same carrier/region as that target device.

7. A system for downloading a data resource, comprising a plurality of network devices that include a first device, wherein the first device is configured to:

at the beginning of downloading a target data resource, determine a plurality of candidate devices storing data slices of the target data resource and slice serial numbers of data slices of the target data resource stored by each of the plurality of candidate devices;

acquire a total number of slices for data slices of a same type of data resources as the target data resource that have been downloaded from each of the plurality of candidate devices; and

download the data slices of the target data resource according to the slice serial numbers, the total number of slices downloaded from each of the plurality of candidate devices, and a preset time-length for overtime switch.

8. The system according to claim 7, wherein the first device is further configured to:

collect target slice serial numbers for data slices that are not stored locally;

for a first serial number in the target slice serial numbers, determine at least one device, from the plurality of candidate devices, that stores a data slice corresponding to the first serial number; and

based on the preset time-length for overtime switch, download the data slice corresponding to the first serial number from the at least one device in a descending order of the total number of slices.

9. The system according to claim 8, wherein the first device is further configured to:

download the data slice corresponding to the first serial number from a device corresponding to a largest total number of slices among the at least one device; and

if the data slice corresponding to the first serial number is not received by the first device after the preset time-length for overtime switch, download the data slice corresponding to the serial number from a device corresponding to a second largest total number of slices among the at least one device.

10. The system according to claim 8, wherein the first device is further configured to:

if the data slice corresponding to the first serial number is not stored in the plurality of candidate devices, after a preset time-length, reacquire slice serial numbers of data slices of the target data source currently stored by each of the plurality of candidate devices;

re-determine the at least one device, from the plurality of candidate devices, that stores the data slice corresponding to the first serial number; and

download the data slice corresponding to the first serial number from the at least one device in a descending order of the total number of slices according to the preset time-length for overtime switch.

11. The system according to claim 7, wherein the first device is further configured to:

calculate an average download time-length and a variance of download time-lengths of the plurality of data slices; and

update the time-length for overtime switch according to the average download time-length and the variance.

12. The system according to claim 7, wherein the plurality of network devices further include a scheduling device and a source device of the target data resource, wherein:

the source device is configured to randomly select a plurality of relay devices among target devices corresponding to the target data resource;

each of the plurality of relay devices is configured to randomly acquire a data slice of the target data resource from the source device, and report a data slice acquisition status to the scheduling device; and

the scheduling device is configured to recommend to each of the target devices, a candidate device, among the plurality of relay devices, that belongs to a same carrier/region as that target device.

**Device Cluster**

FIG. 1

At the beginning of downloading target data resource, first device determines a plurality of candidate devices storing data slices of target data resource and slice serial numbers of data slices of target data resource stored by each of the plurality of candidate devices
201

First device acquires total number of slices for data slices of same type of data resources as target data resource that have been downloaded from each of the plurality of candidate devices
202

First device downloads data slices of target data resource according to slice serial numbers, total number of slices downloaded from each of the plurality of candidate devices, and preset time-length for overtime switch
203

**FIG. 2**

| Source Node | Target Node(s) | Central Server |

1. Preprocess task

2. Assign task

3. Request data slice(s)

4. Report acquisition status

5. Determine candidate node(s)

6. Recommend candidate node(s)

7. Share data slices between nodes

8. Record download time-lengths, update time-length for overtime switch

**FIG. 3**

**EP 3 672 205 A1**

## INTERNATIONAL SEARCH REPORT

International application No.

**PCT/CN2018/091213**

| A. | CLASSIFICATION OF SUBJECT MATTER |
|---|---|

H04L 29/08(2006.01)i

According to International Patent Classification (IPC) or to both national classification and IPC

| B. | FIELDS SEARCHED |
|---|---|

Minimum documentation searched (classification system followed by classification symbols)

H04L; H04N; H04W; H04Q; H04J

Documentation searched other than minimum documentation to the extent that such documents are included in the fields searched

Electronic data base consulted during the international search (name of data base and, where practicable, search terms used)

CNABS; VEN; CNTXT; WOTXT; USTXT; EPTXT; CNKI; 3GPP: 数据, 下载, 内容, 分发, 切片, 序号, 时长, 时延, CDN, content, data, delivery, slice, number, delay, timeout

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 101150506 A (HUAWEI TECHNOLOGIES CO., LTD. ET AL.) 26 March 2008 (2008-03-26)<br>  description, pages 1-13, and figures 1-5 | 1-12 |
| Y | US 9043489 B2 (CLEVERSAFE, INC.) 26 May 2015 (2015-05-26)<br>  description, columns 2-38, and figures 1-21 | 1-12 |
| A | CN 103188279 A (CHINA TELECOM CORPORATION LIMITED) 03 July 2013 (2013-07-03)<br>  entire document | 1-12 |
| A | CN 106993054 A (TENCENT TECHNOLOGY (SHENZHEN) COMPANY LIMITED) 28 July 2017 (2017-07-28)<br>  entire document | 1-12 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 November 2018** | **11 December 2018** |

| Name and mailing address of the ISA/CN | Authorized officer |
|---|---|
| **State Intellectual Property Office of the P. R. China (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

14

**INTERNATIONAL SEARCH REPORT**
Information on patent family members

International application No.

**PCT/CN2018/091213**

| Patent document cited in search report | | | Publication date (day/month/year) | Patent family member(s) | | | Publication date (day/month/year) |
|---|---|---|---|---|---|---|---|
| CN | 101150506 | A | 26 March 2008 | CN | 101150506 | B | 06 July 2011 |
| US | 9043489 | B2 | 26 May 2015 | US | 2011106972 | A1 | 05 May 2011 |
| CN | 103188279 | A | 03 July 2013 | CN | 103188279 | B | 01 June 2016 |
| CN | 106993054 | A | 28 July 2017 | None | | | |

Form PCT/ISA/210 (patent family annex) (January 2015)